# EUROPÄISCHE PATENTANMELDUNG

(11) **EP 2 905 326 A1**
(43) Veröffentlichungstag der Anmeldung: **12.08.2015**
(21) Anmeldenummer: 15151484.1
(22) Anmeldetag: 16.01.2015
(51) Int. Cl.: C12C 7/06, C12C 7/16, C12C 7/04

(54) **Verfahren und Vorrichtung zur Würzebereitung bei der Bierherstellung**

(30) Priorität: 11.02.2014 DE 102014101635
(71) Anmelder: Kaspar Schulz Brauereimmaschinenfabrik & Apparatebauanstalt e. K., 96052 Bamberg (DE)
(72) Erfinder: Binkert, Jörg, 96149 Breitengüßbach (DE); Lauer, Johannes, 96047 Bamberg (DE); Becker, Thomas, 85111 Adelschlag (DE); Kern, Matthias, 82435 Bad Bayersoien (DE); Tippmann, Johannes, 85354 Freising (DE)
(74) Vertreter: Zimmermann & Partner Patentanwälte mbB

(57) **Zusammenfassung**

Die Erfindung betrifft ein Verfahren und eine Vorrichtung zur Würzebereitung bei der Bierherstellung. Dabei wird durch eine Vermischung von geschrotetem Malz und Wasser ein Maischen durchgeführt und aus der erhaltenen Maische durch ein Läutern Würze bereitgestellt. Das Maischen und das Läutern erfolgt in ein und demselben Gefäß. Sowohl das Maischen als auch das Läutern erfolgen unter Zuführung eines Gases oder eines Gasgemisches.

## Beschreibung

Die Erfindung betrifft ein Verfahren und eine Vorrichtung zur Würzebereitung bei der Bierherstellung.

Beim Bierbrauen werden die Bierzutaten Wasser, Malz und Hopfen miteinander vermischt und teilweise durch Zugabe von Hefe biochemisch verändert. Nachdem aus Getreide, in der Regel Gerste, Malz hergestellt wurde, wird dieses geschrotet. Der eigentliche Brauprozess beginnt mit dem Maischen, welches in einem Maischegefäß durchgeführt wird. Dabei wird Wasser auf etwa 50° - 60°C erwärmt, dann das geschrotete Malz dazugegeben und die entstandene Maische unter ständigem Rühren bis auf etwa 75°C - 78°C erhitzt. Bei verschiedenen Rasttemperaturen setzen Enzyme Stärke aus dem Malz in Malzzucker um und es finden auch andere enzymatische Vorgänge statt. Mittels einer Jodprobe wird anschließend festgestellt, ob die gelöste Stärke vollständig verzuckert ist.

Danach wird die Maische in einen Läuterbottich geleitet und dort geläutert. Dabei werden der Malztreber und die Würze, bei der es sich um den flüssigen vergärbaren Teil der Maische handelt, voneinander getrennt. Bei diesem Läutern sinken alle Feststoffe der Maische nach unten und es bildet sich am Boden des Läuterbottichs ein Treberkuchen aus, welcher als Filterschicht dient. Die Flüssigkeit der Suspension fließt durch den Treberkuchen, der die im Sud enthaltenen Schwebstoffe herausfiltert. Somit scheiden sich alle Feststoffe der Maische als Treber ab, der als Viehfutter verwendet werden kann. Die gewonnene klare Flüssigkeit ist die Würze. Während des Läuterns verlangsamt sich bzw. versiegt der Würzestrom immer wieder und es muss durch die Verwendung eines Hackwerks des Läuterbottichs immer wieder ein Abfließen des Würzestroms erreicht werden. Dabei wird durch das Aufhacken des Treberkuchens mittels des Hackwerks die Durchlässigkeit des Treberkuchens wieder hergestellt.

Nach dem Läutern wird die Würze in eine Würzepfanne geleitet und dort unter Zugabe von Hopfen einem Würzekochvorgang unterworfen. Der nach dem Würzekochen vorliegende Sud wird anschließend aus der Würzepfanne in einen Whirlpool gepumpt, um geronnenes Eiweiß, Hopfenreste und andere Schwebstoffe von der Ausschlagwürze zu trennen.

Schließlich wird die erhaltene Flüssigkeit, die auch Anstellwürze genannt wird, in einem Würzekühler auf die gewünschte Gärtemperatur abgekühlt und es wird je nach Biersorte eine geeignete Hefekultur zugesetzt. Bei der alkoholischen Gärung setzt die Hefe den in der Würze gelösten Zucker zu Äthanol und Kohlendioxid um. Dieses Gas bleibt zum Teil im fertigen Bier unter Druck als Kohlensäure gebunden. Nach der Hauptgärung, die etwa eine Woche dauert, muss das Jungbier noch etwa 2 - 3 Wochen nachgären und lagern. Das gereifte Bier wird dann in der Regel nochmals gefiltert und schließlich in Fässer, Flaschen oder Dosen abgefüllt.

Aus der DE 202 21 534 U1 ist bereits eine Vorrichtung zur Herstellung von Würze aus Malz bekannt, gemäß welcher in ein als Verpackung nutzbares Gefäß ein Filterboden mit Austrittsöffnungen für Gas zwecks Durchmischung und intensiver Umwälzung der Maische integriert ist. Das Gefäß ist mit geschrotetem Malz füllbar und luftdicht verschließbar. Zur Würzebereitung wird das Gefäß geöffnet, an Gas angeschlossen und mit Wasser befüllt. Zur Durchmischung der Maische wird das Gas eingeblasen, wodurch eine Umwälzung der Maische stattfindet. Zum anschließenden Abläutern hat das Gefäß unterhalb des Filterbodens eine Öffnung, durch welche ein Ablaufen der Würze erfolgen kann.

Der Erfindung liegt die Aufgabe zugrunde, ein verbessertes Verfahren und eine verbesserte Vorrichtung zur Würzebereitung bei der Bierherstellung anzugeben.

Diese Aufgabe wird durch ein Verfahren mit den im Anspruch 1 angegebenen Merkmalen und durch eine Vorrichtung mit den im Anspruch 9 angegebenen Merkmalen gelöst. Vorteilhafte Ausgestaltungen und Weiterbildungen eines Verfahrens mit den im Anspruch 1 angegebenen Merkmalen sind Gegenstand der Ansprüche 2 - 8. Vorteilhafte Ausgestaltungen und Weiterbildungen einer Vorrichtung mit den im Anspruch 9 angegebenen Merkmalen sind in den abhängigen Ansprüchen 10 - 18 angegeben.

Bei der vorliegenden Erfindung werden die bei der Bierherstellung durchgeführten Vorgänge Maischen und Läutern in ein und demselben Gefäß durchgeführt, wobei sowohl beim Maischen als auch beim Läutern die Zuführung eines Gases erfolgt, bei dem es sich vorzugsweise um Stickstoff oder um ein Gasgemisch handelt, welches vorzugsweise Stickstoff und Wasserdampf enthält. Dadurch wird ein energieschonender kombinierter Maisch- und Läuterprozess bereitgestellt.

Während des Maischens erfolgt eine Durchmischung und Erwärmung der Maische durch das genannte Gasgemisch unter Verzicht auf herkömmliche Rührorgane. Dadurch werden eine bereits vor der Kochung stattfindende erste Austreibung unerwünschter Aromastoffe sowie eine qualitative Verbesserung der entstehenden Würze erreicht. Durch den in die Maische geleiteten Gasstrom nehmen flüssigkeitsseitig entstehende Blasen Einfluss auf die umgebende Maische. Durch Stofftransport erfolgt eine Verdunstung von Aromastoffen aus der Würze. Des Weiteren führt ein resultierender Flotationsprozess durch die Gasblasen zu einer Abscheidung von Feinstpartikeln an der Maischeoberfläche. Dadurch wird der anschließende Läuterprozess verbessert. Zudem fördert der Volumenstrom der aufsteigenden Gasblasen die Durchmischung und ein gleichmäßiges Aufheizen der Maische,wobei Letzteres die Würzequalität erhöht.

Durch die Gaseinbringung bieten sich des Weiteren Variationsmöglichkeiten, die sowohl beim Maischen als auch beim Läutern einen größeren Einfluss haben als herkömmliche Rührwerke. Beispielsweise kann in Abhängigkeit von Ausgangssignalen von verschiedenen Sensoren der Volumenstrom des Gases, das Mischungsverhältnis des Gases, die Zeitpunkte bzw. Zeiträume der Gaszuführung, usw., beeinflusst werden. Kurze Unterbrechungen der Gaszuführung können bei geeigneter Prozessführung einzelne Effekte hervorheben oder unterdrücken.

Für die Durchmischung eignen sich insbesondere Inertgase, beispielsweise Stickstoff, da Sauerstoff unerwünschte Reaktionen in der Maische mit sich bringen würde. Um auch eine ausreichende Erwärmung der Maische durch die zugeführten Gase erreichen zu können, muss über die Gaszufuhr auch ausreichend Energie transportiert werden. Dies wird vorzugsweise durch eine Kombination des Stickstoffs mit Wasserdampf erreicht. Dabei kann in vorteilhafter Weise während der Aufheizphase viel Dampf verwendet werden, um die benötigte Energie einzutragen. Für ein Halten der Temperatur während des Rastens kann in vorteilhafter Weise vermehrt Stickstoff für eine Verbesserung der Durchmischung zugeführt werden.

Folglich führt das dem Gefäß zugeführte Gas bzw. Gasgemisch während des Maischens zu einer möglichst gleichmäßigen Erhitzung der Maische sowie zu deren guter Durchmischung, und während des Läuterns insbesondere zu einer Auflockerung des Treberkuchens, um diesen für die ablaufende Würze durchlässig zu halten.

Weitere vorteilhafte Eigenschaften der Erfindung ergeben sich aus deren nachfolgender beispielhafter Erläuterung anhand der Figuren. Es zeigt
- Figur 1: eine Skizze zur Veranschaulichung eines ersten Ausführungsbeispiels für ein Maische- und Läutergefäß gemäß der Erfindung,
- Figur 2: eine perspektivische Skizze zur Veranschaulichung eines Ausführungsbeispiels für den Bodeneinsatz des in der Figur 1 gezeigten Maische-und Läutergefäßes,
- Figur 3: eine Skizze zur Veranschaulichung eines zweiten Ausführungsbeispiels für ein Maische- und Läutergefäß gemäß der Erfindung,
- Figur 4: eine Skizze zur Veranschaulichung eines dritten Ausführungsbeispiel für ein Maische- und Läutergefäß gemäß der Erfindung und
- Figur 5: eine Skizze zur Veranschaulichung eines Ausführungsbeispiels für eine Vorrichtung zur Höhenverstellung der Düsen.

Gemäß der vorliegenden Erfindung wird ein Verfahren zur Würzebereitung bei der Bierherstellung bereitgestellt, bei welchem durch eine Vermischung von geschrotetem Malz und Wasser ein Maischen durchgeführt wird und bei welchem aus der erhaltenen Maische durch ein Läutern Würze bereitgestellt wird, wobei das Maischen und das Läutern in ein und demselben Gefäß durchgeführt werden und wobei sowohl das Maischen als auch das Läutern unter Zuführung eines Gases durchgeführt wird. Als Gas im Sinne der Erfindung wird ein reines Gas und auch ein Gasgemisch verstanden.

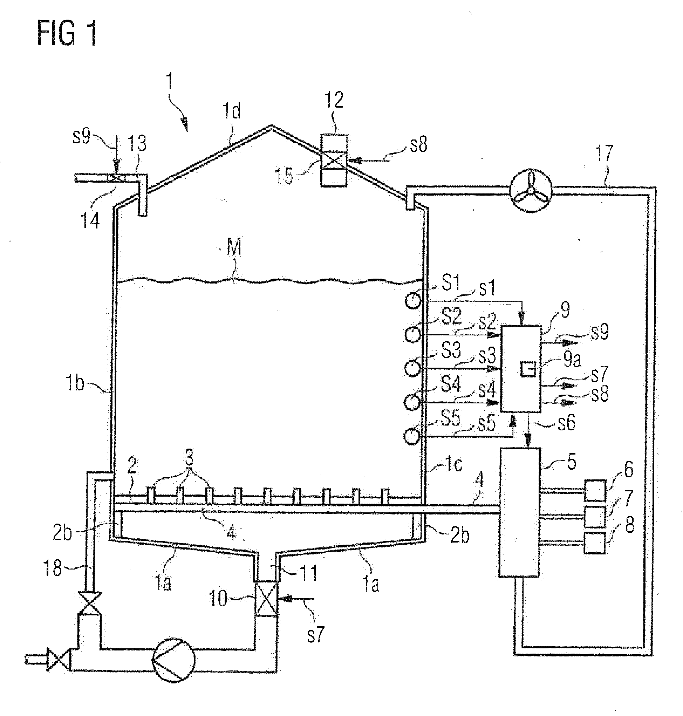

Die Figur 1 zeigt eine Skizze zur Veranschaulichung eines ersten Ausführungsbeispiels für ein Gefäß, in welchem das Maischen und das Läutern durchgeführt wird. Dieses Gefäß hat eine kreisförmige Grundfläche.

Das dargestellte Gefäß 1 weist einen Gefäßboden 1a, gefäßseitenwände 1b und 1c und einen Gefäßdeckel 1d auf. Der Gefäßboden 1a verläuft in Richtung zur Gefäßmitte schräg nach unten und weist in der Gefäßmitte einen Würzeausgang 11 auf. Im Bereich dieses Würzeausgangs 11 ist ein Würzeablassventil 10 vorgesehen, mittels dessen der Würzeausgang 11 geschlossen oder geöffnet werden kann.

Im Bereich des Gefäßdeckels 1d befinden sich ein Schroteinlass 12 und ein Wassereinlass 13. Der Schroteinlass 12 weist ein Schroteinlassventil 15 auf, mittels dessen der Schroteinlass 12 geschlossen oder geöffnet werden kann. Der Wassereinlass 13 ist mit einem Wassereinlassventil 14 ausgestattet, mittels dessen der Wassereinlass 13 geschlossen oder geöffnet werden kann.

Innerhalb des Gefäßes 1 befindet sich Maische M, die aus mit Wasser vermischtem geschrotetem Malz besteht, wobei das geschrotete Malz durch den Schroteinlass 12 und das Wasser durch den Wassereinlass 13 in das Gefäß 1 eingebracht wurden.

Während des Maischens erfolgt eine Erwärmung der Maische M und eine Durchmischung der Maische M. Diese Erwärmung und Durchmischung der Maische M erfolgt beim gezeigten Ausführungsbeispiel unter Verwendung eines Gasgemisches, welches aus einem inerten Gas und Wasserdampf besteht. Als inertes Gas wird vorzugsweise Stickstoff verwendet. Dies hat den Vorteil, dass das verwendete Gas während des Maischens keine unerwünschten Nebenreaktionen im Gefäß auslöst.

Das Gasgemisch wird unter Verwendung einer Gaszuleitung 4 in das Gefäß 1 eingebracht, wobei diese Gaszuleitung 4 beim gezeigten Ausführungsbeispiel durch die Seitenwand 1c des Gefäßes 1 geführt ist. Innerhalb des Gefäßes 1 ist die Gaszuleitung 4 beispielsweise ringförmig ausgebildet, wobei der gebildete Gasverteilring mehrere nach innen gerichtete Querverstrebungen aufweisen kann. Der Gasverteilring 4 weist im Innenbereich des Gefäßes 1 nach oben gerichtete Düsen 3 auf, durch welche das zugeführte Gasgemisch ausgebbar ist. Die Düsen 3 sind durch einen Bodeneinsatz 2 geführt, wobei der obere Endbereich der Düsen 3 etwas über die Oberfläche des Bodeneinsatzes 2 hinausragt oder bündig mit dieser ausgebildet ist.

Der Bodeneinsatz 2, durch welchen die Düsen 3 geführt sind, weist in den horizontalen Bereichen, in denen keine Düsen sind, eine gitterförmige oder schlitzförmige Struktur auf, so dass diese Bereich des Bodeneinsatzes für Flüssigkeiten durchlässig sind. Des Weiteren weist der Bodeneinsatz 2 in seinem radialen Außenbereich Füße 2b auf, mittels derer er auf den Gefäßboden 1a aufgesetzt ist. Diese Füße 2b sind beim gezeigten Ausführungsbeispiel in Form eines sich nach unten erstreckenden Bodeneinsatzrandes ausgebildet, der sich innerhalb des Gefäßes um 360° um den Innenmantel des Gefäßes erstreckt und innen an diesem anliegt. Die im Bodeneinsatz 2 befindlichen Löcher oder Schlitze sind derart dimensioniert, dass die gebildete Maische die Löcher oder Schlitze nicht durchdringen kann.

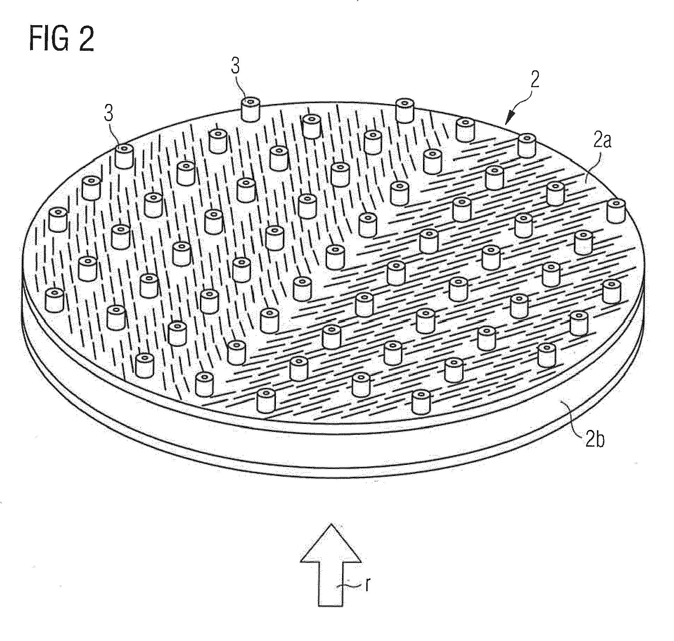

Die Figur 2 zeigt eine perspektivische Ansicht zur Veranschaulichung eines Ausführungsbeispiel für den Bodeneinsatz 2 des in der Figur 1 gezeigten Maische- und Läutergefäßes 1. Aus dieser Darstellung sind insbesondere die durch den Bodeneinsatz 2 geführten Düsen 3 und die im Bodeneinsatz vorgesehenen Schlitze 2a sowie der umlaufende Rand 2b des Bodeneinsatzes ersichtlich. Des Weiteren ist aus der Figur 2 die Gaszufuhrrichtung r durch einen Pfeil veranschaulicht. Es ist ersichtlich, dass die Gaszufuhr von unten erfolgt und das Gas bzw. Gasgemisch durch die Düsen 3 nach oben geblasen wird.

Das durch die Düsen 3 in das Gefäß 1 eingebrachte Gasgemisch sorgt - wie bereits oben ausgeführt wurde - für ein Erwärmen und ein Durchmischen der Maische.

Der Volumenstrom des Gasgemisches und auch das Mischungsverhältnis des Gasgemisches werden während des Maischens von einer Steuereinheit 9 eingestellt und bei Bedarf verändert. Die Steuereinheit 9 nimmt die Einstellung und Veränderung des Volumenstromes bzw. des Mischungsverhältnisses des Gasgemisches in Abhängigkeit von einem Steuerprogramm und von Sensorausgangssignalen vor.

Bei dem Steuerprogramm handelt es sich um eine Steuersoftware, die in einem Speicher 9a der Steuereinheit 9 abgespeichert ist. Die Sensorausgangssignale werden von Sensoren bereitgestellt, die im Gefäß 1 vorgesehen sind. Zu diesen Sensoren gehören beim gezeigten Ausführungsbeispiel ein erster Temperatursensor S1, ein Viskositätssensor S2, ein erster Füllstandssensor S3, ein zweiter Temperatursensor S4 und ein dritter Temperatursensor S5. Die Anzahl der Sensoren kann auch anders gewählt werden. Mittels der Temperatursensoren S1, S4 und S5 wird die Temperatur der Maische M an unterschiedlichen Höhenpositionen des Gefäßes 1 erfasst. Mittels des Füllstandssensors S3 werden Informationen über den Füllstand des Gefäßes 1 gewonnen.Mittels des Viskositätssensors S2 werden Informationen über die Viskosität der Maische gewonnen. Die von diesen Sensoren bereitgestellten Sensorausgangssignale s1, ..., s5 werden der Steuereinheit 9 zugeführt, welche unter Verwendung dieser Sensorausgangssignale und des genannten Steuerprogrammes Steuersignale s6 ermittelt.

Diese Steuersignale s6 werden einer Mischvorrichtung 5 zugeführt, die an ihrem Ausgang der Gaszuleitung 4 das genannte Gasgemisch zur Verfügung stellt. Die Mischvorrichtung 5 ist mit einer Stickstoffquelle 6 und einer Dampfquelle 7 verbunden, welche der Mischvorrichtung 5 Stickstoff sowie Dampf zuleiten, aus welchen in der Mischvorrichtung 5 ein Gasgemisch gebildet wird, dessen Volumenstrom und Mischungsverhältnis von den Steuersignalen s6 abhängig sind.

Des Weiteren kann die Mischvorrichtung 5 auch mit einer Wasserquelle 8 verbunden und dazu ausgebildet sein, ein Gasgemisch bereitzustellen, welches Stickstoff, Wasserdampf und Wasser enthält, wobei auch in diesem Falle der Volumenstrom und das Mischungsverhältnis des Gasgemisches von Steuersignalen s6 abhängig sind, die von der Steuereinheit 9 bereitgestellt werden.

Das genannte Steuerprogramm der Steuereinheit 9 ist derart ausgebildet, dass es nicht nur den Volumenstrom und das Mischungsverhältnis des Gasgemisches beeinflusst, sondern auch die Zeitpunkte und die Zeitdauern der Gaseinbringung in die Maische, um den Maischevorgang insgesamt zu optimieren.

Beispielsweise werden die Steuersignale s6 derart bereitgestellt, dass in den Zeitabschnitten, in welchen eine Erhöhung der Temperatur der Maische durchgeführt wird, der Anteil des Wasserdampfes im Gasgemisch erhöht wird, und in den Zeitabschnitten, in denen die Maische bei gleichbleibender Temperatur rastet, der Anteil des Stickstoffes im Gasgemisch erhöht wird, um die Durchmischung der Maische zu verbessern.

Das genannte Steuerprogramm der Steuereinheit 9 ist des Weiteren derart ausgebildet, dass die Steuereinheit 9 auch Steuersignale s7, s8 und s9 ausgibt. Die Steuersignale s7 werden dem im Bereich des Würzeausgangs 11 vorgesehenen Würzeablassventil 10 zugeführt, um dieses zu schließen bzw. zu öffnen. Beispielsweise stellt die Steuereinheit 9 die Steuersignale s7 derart bereit, dass das Würzeablassventil 10 während des gesamten Maischvorganges im geschlossenen Zustand verbleibt, so dass Flüssigkeitsbestandteile, die während des Maischens den Bodeneinsatz 2 durchdringen, im Gefäß 1 unterhalb des Bodeneinsatzes 2 auf dem Gefäßboden 1a gesammelt werden. Diese Flüssigkeitsbestandteile können während oder nach Beendigung des Maischevorganges gesondert abgelassen oder über eine Rückführleitung 18 rückgeführt werden oder auch im Rahmen des nach dem Maischvorgang durchgeführten Läutervorganges über die Rückführleitung 18 rückgeführt werden.

Ist der Maischvorgang abgeschlossen, dann wird im Gefäß 1 auch das Läutern der Maische durchgeführt. Folglich bedarf es in vorteilhafter Weise keines Umpumpens der Maische von einem Maischebehälter in ein Läutergefäß.

Auch dieses Läutern, bei welchem Treber bzw. ein Treberkuchen auf dem Bodeneinsatz 2 zurückgehalten wird und Würze durch die Sieböffnungen bzw. Schlitze des Bodeneinsatzes 2 nach unten abfließt und bei geöffnetem Würzeablassventil 10 durch den Würzeausgang 11 ausgegeben werden, erfolgt unter Steuerung durch die Steuereinheit 9 und unter Einblasung eines Gasgemisches durch die Düsen 3 in den Innenraum des Gefäßes. Auch bei diesem Läutern stellt die Steuereinheit 9 in Abhängigkeit von den Sensorausgangssignalen s1, ..., s5, die von den Sensoren S1, ..., S5 bereitgestellt werden, und unter Verwendung des Steuerprogrammes Steuersignale s6 für die Mischvorrichtung 5 bereit. Diese stellt auch während des Läuterns an ihrem Ausgang ein Gasgemisch bereit, dessen Volumenstrom und Mischungsverhältnis von den Steuersignalen s6 abhängig sind.

Während des Läuterns hat das dem Gefäß 1 zugeführte Gasgemisch insbesondere die Aufgabe, den auf dem Bodeneinsatz 2 entstehenden Treberkuchen aufzulockern, so dass die Löcher bzw. Schlitze des Bodeneinsatzes 2 freigehalten werden, so dass der ablaufende und durch den Würzeausgang 11 ausgegebene Würzestrom am Laufen gehalten wird.

Des Weiteren werden auch während des Läuterns der Volumenstrom, das Mischungsverhältnis, die Zeitpunkte und die Zeitdauern der Einbringung des Gasgemisches von der Steuereinheit 9 im Sinne einer Optimierung des Läutervorganges eingestellt, wobei auch diese Einstellungen in Abhängigkeit vom Steuerprogramm und den Sensorausgangssignalen erfolgen.

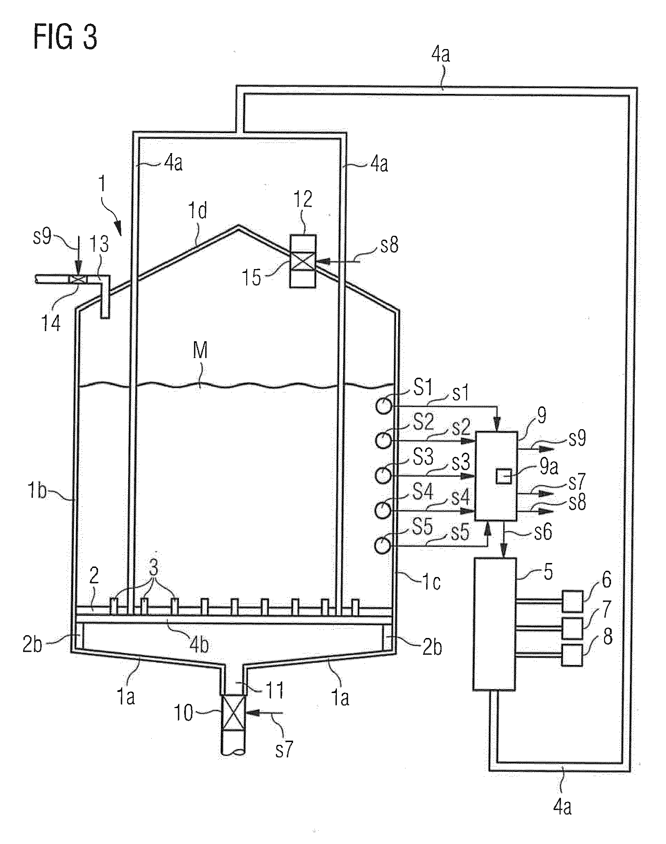

Die Figur 3 zeigt eine Skizze zur Veranschaulichung eines zweiten Ausführungsbeispiel für ein Maische- und Läutergefäß der Erfindung. Dieses unterscheidet sich von dem in der Figur 1 gezeigten ersten Ausführungsbeispiel dadurch, dass die Zuführung des Gasgemisches nicht durch eine Seitenwand des Gefäßes 1 erfolgt, sondern durch den Gefäßdeckel 1d. Beim gezeigten Ausführungsbeispiel wird die von der Mischvorrichtung 5 ausgehende Gaszuleitung 4a außerhalb des Gefäßes 1 in zwei Arme aufgeteilt, die beide durch den Gefäßdeckel 1d hindurchgeführt sind, in Form von Rohren senkrecht in den unteren Bereich des Gefäßes 1 geführt sind und dort mit einem Gasverteilring 4b verbunden sind. Der Gasverteilring 4b befindet sich an der Unterseite des Bodeneinsatzes 2 und weist durch den Bodeneinsatz geführte, nach oben gerichtete Düsen 3 auf, durch welche das über die Zuleitung 4a zugeführte Gasgemisch nach oben oder seitlich ausgegeben wird.

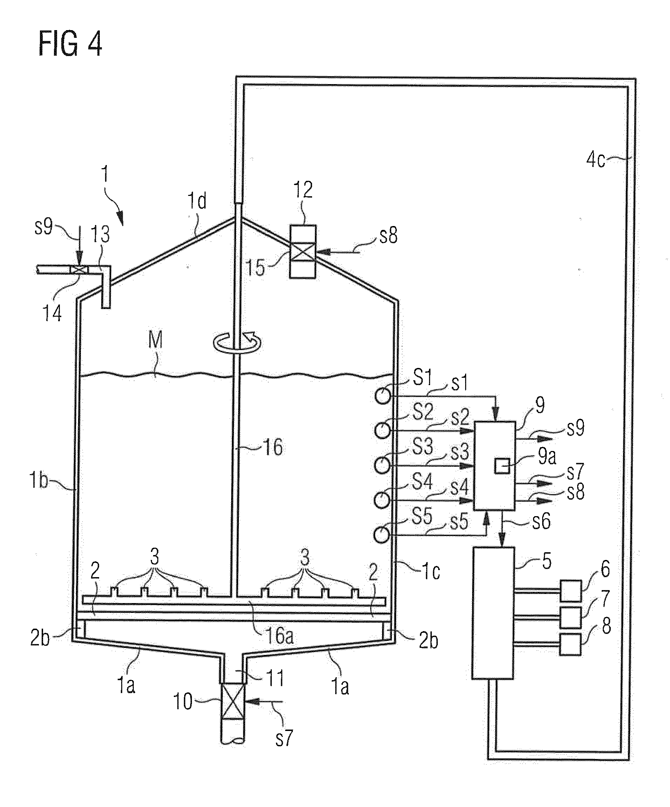

Die Figur 4 zeigt eine Skizze zur Veranschaulichung eines dritten Ausführungsbeispiels für ein Maische- und Läutergefäß. Dieses unterscheidet sich von den in den Figuren 1 und 3 gezeigten Ausführungsbeispielen durch eine geänderte Gaszuführung in das Gefäß 1. Bei diesem Ausführungsbeispiel ist eine von der Mischvorrichtung 5 ausgehende Gaszuleitung 4c vorgesehen, die an die Oberseite des Gefäßes 1 herangeführt wird und dort entweder außerhalb oder innerhalb des Gefäßes 1 das Gas an einen Düsenträger 16 weitergibt.

Der ein Rohr bildende Düsenträger 16 erstreckt sich senkrecht nach unten bis in den unteren Bereich des Gefäßes 1 und geht dort in einen Gasverteilring 16a über. Dieser Gasverteilring 16a kann nach innen gerichtete Querverstrebungen aufweisen und weist des Weiteren nach oben gerichtete Düsen 3 auf, durch welche das über die Gaszuleitung angelieferte Gas nach oben ausgegeben wird. Bei diesem Ausführungsbeispiel befindet sich zwischen dem Gasverteilring 16a und dem Bodeneinsatz 2, welcher keine Düsen aufweist, ein kleiner Abstand.

Wie in der Figur 4 angedeutet ist, kann der Düsenträger 16 drehbar ausgebildet sein, wobei das in der Gefäßmitte 1 senkrecht hinabgeführte Rohr 16 die Drehachse bildet. Durch ein Drehen des Rohres 16 im Betrieb wird das Durchmischen bzw. Auflockern der im Innenbereich des Gefäßes 1 befindlichen Masse weiter verbessert.

Gemäß einem weiteren, nicht in den Figuren dargestellten Ausführungsbeispiel kann das im selben Gefäß durchgeführte Maischen und Läutern auch erfolgen, indem durch die Gaszuleitung kein Gasgemisch, sondern lediglich ein inertes Gas eingeleitet wird, welches beim Maischen zur Durchmischung der Maische und beim Läutern zur Auflockerung des gebildeten Treberkuchens dient. Die notwendige Erwärmung der im Gefäß befindlichen Masse erfolgt auf andere Weise, beispielsweise durch gesonderte Heizelemente, die in oder am Gefäß vorgesehen sind.

Bei diesem weiteren Ausführungsbeispiel stellt die Steuereinheit 9 die Steuersignale s6 derart bereit, dass diese den Volumenstrom des zugeführten Gases, bei welchem es sich vorzugsweise um Stickstoff handelt, in Abhängigkeit von einem vorgegebenen Steuerprogramm und den Sensorausgangssignalen einstellt und auch die Zeitpunkte und Zeitdauern der Einleitung des Gases in das Gefäß 1 steuert.

Eine vorteilhafte Weiterbildung der Erfindung besteht darin, ausgedampftes Gas wieder zurückzuführen, d. h. über eine Bypassleitung 17 wieder der Mischvorrichtung 5 zuzuführen. Dies ist in der Figur 1 veranschaulicht, kann aber auch bei den in den Figuren 3 und 4 gezeigten Ausführungsformen durchgeführt werden. Durch eine derartige Rückführung des ausgedampften Gases wird eine Wiederverwendung des Gases möglich.

Eine weitere vorteilhafte Weiterbildung der Erfindung besteht darin, im Bereich der Bypassleitung 17 eine Filtervorrichtung zur Filterung des Gases vorzusehen, um unerwünschte Aromastoffe, welche im verdampften Gas enthalten sind, auszufiltern.

Eine noch weitere vorteilhafte Weiterbildung der Erfindung besteht darin, die Düsen 3 bzw. deren Träger höhenverstellbar, d. h. heb- und senkbar auszugestalten. Dies hat den Vorteil, dass die Düsen bei Bedarf im Bodeneinsatz 2 verschwinden können, so dass dessen Oberfläche eben ist. Dies ist für ein späteres Austrebern von Vorteil. Gegebenenfalls können die Düsen 3 zusammen mit einem Gasverteilring 16a an welchem sie befestigt sind, so weit angehoben bzw. abgesenkt werden, dass sie bei der Austreberung nicht mehr stören. Der Gasverteilring 16a kann auch tellerförmig ausgebildet sein. Der Gasverteilring kann unterhalb oder innerhalb des Gefäßes 1 angeordnet sein.

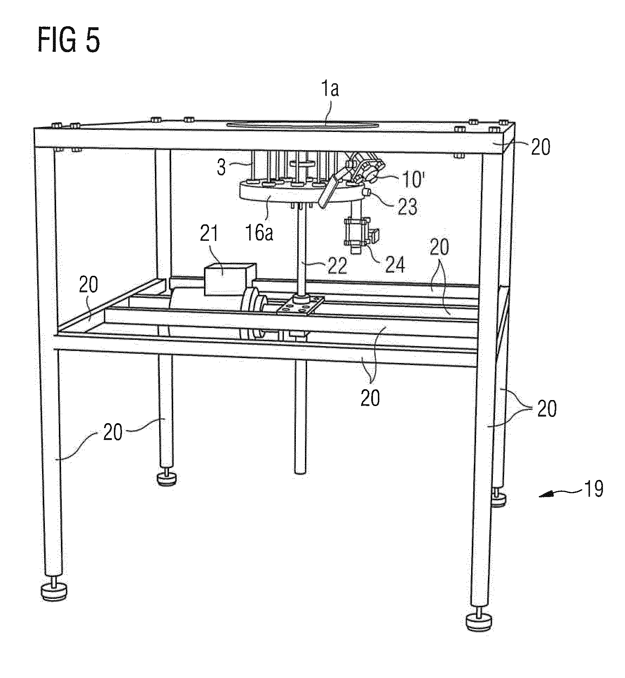

Die Figur 5 zeigt eine Skizze zur Veranschaulichung eines Ausführungsbeispiels für eine Vorrichtung zur Höhenverstellung der Düsen.

Diese Vorrichtung weist ein Metallgestell 19 auf, welches auf dem Boden eines Sudhauses aufstellbar ist und eine Vielzahl von miteinander verbundenen Streben 20 enthält. An diesem Metallgestell 19 ist ein Antrieb 21 befestigt, der zur Höhenverstellung einer Spindel 22 vorgesehen ist. Bei diesem Antrieb 21 handelt es sich vorzugsweise um einen Elektromotor. Der obere Endbereich der Spindel 22 ist fest mit einem Gasverteilring 16a verbunden, welcher einen Gaseingang 23 und einen Kondensatablass aufweist. Des Weiteren dient der Gasverteilring 16a als Träger und ist mit einer Vielzahl von senkrecht nach oben aus dem Gasverteilring 16a austretenden Düsen 3 versehen, deren obere Endbereiche durch den Gefäßboden 1a des nicht im Detail dargestellten Gefäßes 1 geführt sind und während des Maischens und Läuterns nach oben über den Gefäßboden 1a hinaus sich bis in den Innenraum des Gefäßes 1 erstrecken.

Im unteren Bereich des Gefäßbodens 1a ist ein Würzesammelraum vorgesehen, aus welchem unter Verwendung eines Würzeablassventils 10' die gebildete Würze abfließen kann. Dieses Würzeablassventil 10' ist beim gezeigten Ausführungsbeispiel im seitlichen Außenbereich des unteren Bereiches des Gefäßbodens 1a vorgesehen.

Soll nach Beendigung des Läutervorganges ein Austrebern des auf der Oberseite des Gefäßbodens 1a gebildeten Trebers erfolgen, dann wird von der nicht dargestellten Steuereinheit 9 dem Antrieb 21 ein Steuersignal zugeleitet, aufgrund dessen der Antrieb 21 die Spindel 22 derart antreibt, dass sich diese nach unten bewegt. Dies hat zur Folge, dass sich auch der auf der Spindel 22 befestigte Gasverteilring 16a samt der auf diesem befestigten Düsen 3 nach unten bewegt, so dass die oberen Endbereiche der Düsen 3, die während des Läuterns über den Gefäßboden 1a nach oben hinausragen, so weit nach unten zurückgezogen werden, dass die Oberseiten der Düsen 3 mit der Oberfläche des Gefäßbodens 1a bündig bzw. plan verlaufen. Dies erleichtert ein Austrebern des Gefäßes 1.

Bei dieser Ausführungsform ist der Gaseingang 23 mittels eines als Gaszuleitung 4 dienenden flexiblen bzw. biegbaren Schlauches mit der als Gasquelle dienenden Mischvorrichtung 5 verbunden. Des Weiteren sind bei dieser Ausführungsform der Antrieb 21, der Gasverteilring 16a und die unteren Endbereiche der auf dem Gasverteilring 16a angeordneten Düsen 3 unterhalb des Gefäßbodens 1a und damit außerhalb des Gefäßes 1 angeordnet. Ferner lastet bei dieser Ausführungsform das Gewicht des Gefäßes auf dem Metallgestell 19. Das Gefäß kann mittels Flanschtechnik mit der Vorrichtung dicht abgeschlossen werden. Auch ein Verschweißen mit der Vorrichtung ist möglich.

### Bezugszeichenliste

- 1: Gefäß
- 1a: Gefäßboden
- 1b, 1c: Gefäßseitenwand
- 1d: Gefäßdeckel
- 2: Bodeneinsatz
- 2a: Schlitze
- 2b: Füße
- 3: Düsen
- 4: Gaszuleitung
- 4a: Gaszuleitung
- 4b: Gasverteilring
- 4c: Gaszuleitung
- 5: Mischvorrichtung
- 6: Stickstoffquelle
- 7: Dampfquelle
- 8: Wasserquelle
- 9: Steuereinheit
- 9a: Speicher für Arbeitsprogramm
- 10: Würzeablassventil
- 11: Würzeausgang
- 12: Schroteinlass
- 13: Wassereinlass
- 14: Wassereinlassventil
- 15: Schroteinlassventil
- 16: Düsenträger
- 16a: Gasverteilring
- 17: Bypassleitung
- 18: Rückführleitung
- 19: Metallgestell
- 20: Streben
- 21: Antrieb
- 22: Spindel
- 23: Gaseingang
- 24: Kondensatablauf
- M: Maische
- r: Gaszufuhrrichtung
- S1: Temperatursensor
- S2: Viskositätssensor
- S3: Füllstandssensor
- S4: Temperatursensor
- S5: Temperatursensor
- s1,...,s5: Sensorausgangssignale
- s6: Steuersignal für Mischvorrichtung
- s7: Steuersignal für Würzeablassventil
- s8: Steuersignal für Schroteinlassventil
- s9: Steuersignal für Wassereinlassventil

## Patentansprüche

1. Verfahren zur Würzebereitung bei der Bierherstellung, bei welchem durch eine Vermischung von geschrotetem Malz und Wasser ein Maischen durchgeführt wird und bei welchem aus der erhaltenen Maische durch ein Läutern Würze bereitgestellt wird, wobei das Maischen und Läutern in ein und demselben Gefäß durchgeführt wird, **dadurch gekennzeichnet, dass** sowohl das Maischen als auch das Läutern unter Zuführung eines Gases oder eines Gasgemisches durchgeführt wird.

2. Verfahren nach Anspruch 1, **dadurch gekennzeichnet, dass** der Volumenstrom des Gases während des Maischens und Läuterns in Abhängigkeit von Sensorausgangssignalen verändert wird.

3. Verfahren nach Anspruch 1, **dadurch gekennzeichnet, dass** der Volumenstrom und das Mischungsverhältnis des Gasgemisches während des Maischens und des Läuterns in Abhängigkeit von Sensorausgangssignalen verändert wird.

4. Verfahren nach Anspruch 2 oder 3, **dadurch gekennzeichnet, dass** als Sensorausgangssignale die Ausgangssignale eines oder mehrerer Temperatursensoren, eines oder mehrerer Viskositätssensoren und/oder eines oder mehrerer Füllstandssensoren verwendet werden.

5. Verfahren nach Anspruch 4, **dadurch gekennzeichnet, dass** die Sensorausgangssignale einer Steuereinheit zugeführt werden, die aus den Sensorausgangssignalen unter Verwendung eines abgespeicherten Arbeitsprogrammes Daten ermittelt, die dem einzustellenden Volumenstrom und/oder dem einzustellenden Mischungsverhältnis entsprechen, und eine Mischvorrichtung derart ansteuert, dass diese ausgangsseitig einen von den Sensorausgangsignalen abhängigen Volumenstrom und/oder ein von den Sensorausgangssignalen abhängiges Mischungsverhältnis aufweisendes Gasgemisch bereitstellen.

6. Verfahren nach einem der vorhergehenden Ansprüche, **dadurch gekennzeichnet, dass** das Gas innerhalb des Gefäßes durch einen Düsen aufweisenden Bodeneinsatz ausgegeben wird, um während des Maischens die Maische zu durchmischen und während des Läuterns einen auf dem Bodeneinsatz gebildeten Treberkuchen aufzulockern.

7. Verfahren nach einem der Ansprüche 1 - 5, **dadurch gekennzeichnet, dass** das Gas durch eine oder mehrere im Gefäß senkrecht angeordnete und bis in den unteren Bereich des Gefäßes reichende Rohre in das Gefäß eingebracht wird und durch im Bereich des unteren Endes der Stangen vorgesehenen Düsen ausgegeben wird.

8. Verfahren nach Anspruch 7, dadurch **gekenn**z e i c h n e t , dass das Gas mittels eines im Bereich des unteren Endes der Stangen angeordneten Gasverteilringes, welcher die Düsen aufweist, ausgegeben wird.

9. Vorrichtung zur Würzebereitung bei der Bierherstellung, welche ein Gefäß (1) aufweist, welches über eine Gaszuleitung (4) mit einer Gasquelle (5) verbunden ist, wobei in dem Gefäß durch eine Vermischung von geschrotetem Malz und Wasser ein Maischen durchführbar ist und wobei das Maischen unter Zuführung eines Gases oder eines Gasgemisches durch die Gaszuleitung (4) in das Gefäß (1) durchführbar ist, **dadurch gekennzeichnet, dass** in dem Gefäß (1) des Weiteren ein Läutern durchführbar ist, wobei das Läutern ebenfalls unter Zuführung eines Gases oder eines Gasgemisches durch die Gaszuleitung (4) in das Gefäß (1) durchführbar ist.

10. Vorrichtung nach Anspruch 9, **dadurch gekennzeichnet, dass** eine Steuereinheit (9) zur Einstellung des Volumenstromes des Gasgemisches während des Maischens und Läuterns Steuersignale (s6) an eine Mischvorrichtung ausgibt.

11. Vorrichtung nach Anspruch 10, **dadurch gekennzeichnet, dass** die Steuereinheit (9) zum Empfang von Sensorausgangssignalen (s1,...,s5) ausgebildet ist und die Steuersignale (s6) in Abhängigkeit von den Sensorausgangssignalen ausgibt.

12. Vorrichtung nach Anspruch 11, **dadurch gekennzeichnet, dass** sie einen oder mehrere Temperatursensoren, einen oder mehrere Viskositätssensoren und/oder einen oder mehrere Füllstandssensoren aufweist, deren Ausgangssignale der Steuereinheit zuführbar sind.

13. Vorrichtung nach Anspruch 11 oder 12, **dadurch gekennzeichnet, dass** sie einen zur Abspeicherung eines Arbeitsprogrammes vorgesehenen Speicher (9a) aufweist und die Steuereinheit (9) unter Verwendung des Arbeitsprogrammes und der Sensorausgangssignale Steuersignale (s6) ermittelt, die einem einzustellenden Volumenstrom und/oder einem einzustellenden Mischungsverhältnis des Gasgemisches entsprechen.

14. Vorrichtung nach einem der Ansprüche 9 - 13, **dadurch gekennzeichnet, dass** sie einen innerhalb des Gefäßes (1) angeordneten, Düsen (3) aufweisenden Bodeneinsatz (2) aufweist, wobei die Düsen (3) mit der Gaszuleitung (4) verbunden sind.

15. Vorrichtung nach einem der Ansprüche 9 - 13, **dadurch gekennzeichnet, dass** sie eine oder mehrere im Gefäß (1) senkrecht angeordnete und bis in den unteren Bereich des Gefäßes reichende Rohre aufweist, durch welche das Gas in das Gefäß (1) einbringbar ist, wobei die Rohre im Bereich ihres unteren Endes Düsen (3) aufweisen, durch welche das Gas ausgebbar ist.

16. Vorrichtung nach Anspruch 15, dadurch **gekenn**z e i c h n e t , dass die Rohre im Bereich ihres unteren Endes mit einem Gasverteilring verbunden sind, welcher die Düsen (3) aufweist.

17. Vorrichtung nach einem der Ansprüche 9 - 13, **dadurch gekennzeichnet, dass** sie höhenverstellbare Düsen (3) aufweist.

18. Vorrichtung nach Anspruch 17, dadurch **gekenn**z e i c h n e t , dass die Düsen auf einem unterhalb des Gefäßes (1) positionierten Gasverteilring (16a) angeordnet sind und senkrecht nach oben durch den Gefäßboden (1a) geführt sind, oder dass die Düsen auf einem innerhalb des Gefäßes (1) positionierten Gasverteilring angeordnet sind.
